# EUROPÄISCHE PATENTSCHRIFT

(11) **EP 0 353 434 B1**
(45) Veröffentlichungstag und Bekanntmachung des Hinweises auf die Patenterteilung: **01.09.1993**
(21) Anmeldenummer: 89110815.1
(22) Anmeldetag: 14.06.1989
(51) Int. Cl.: G01M 1/04

(54) **Spannvorrichtung zum Aufspannen eines zu messenden Rotors, insbesondere Kraftfahrzeugrades, an einer Antriebseinrichtung einer Unwuchtmesseinrichtung**
Clamping device for fixing a rotor to be measured, in particular a vehicle wheel, to the driving device of an unbalance testing unit
Dispositif de serrage pour la fixation d'un rotor à mesurer, en particulier une roue de véhicule, sur l'axe d'entraînement d'une machine d'équilibrage

(30) Priorität: 02.08.1988 DE 3826185
(43) Veröffentlichungstag der Anmeldung: 07.02.1990
(73) Patentinhaber: HOFMANN WERKSTATT-TECHNIK GMBH, D-64319 Pfungstadt (DE)
(72) Erfinder: Mönch, Uwe, D-6102 Pfungstadt (DE)
(74) Vertreter: Nöth, Heinz, Dipl.-Phys.

(56) Entgegenhaltungen:
- DE-A- 2 701 876
- US-A- 4 445 372

## Beschreibung

Die Erfindung betrifft eine Spannvorrichtung nach dem Oberbegriff des Anspruchs 1.

Eine derartige, aus der deutschen Patentschrift 27 01 876 bekannte Spannvorrichtung besitzt eine während des Meßlaufs stillstehende Achse, welche fest mit einer Achse der Antriebseinrichtung einer Unwuchtmeßeinrichtung verbunden werden kann. Die Antriebseinrichtung besitzt ferner eine an dieser Achse gelagerte Nabe, mit welcher eine Mitnehmerscheibe der Spannvorrichtung beispielsweise durch Anflanschen und Festschrauben verbunden werden kann. Die Meßachse ragt dabei durch eine mittlere Bohrung in der Mitnehmerscheibe. Auf die Meßachse kann der zu messende Rotor mit seinen eigenen Rotorlagern aufgesetzt werden, so daß der Rotor für den Meßlauf gegenüber der feststehenden Meßachse drehbar gelagert ist. Hierzu kann die Meßachse selbst entsprechend ausgebildet sein, und es kann noch ein zusätzliches Zentrierstück auf die Meßachse aufgeschoben und fixiert werden. Wenn der zu messende Rotor als Speichenrad ausgebildet ist, greifen an der Mitnehmerscheibe befestigte Mitnehmerstifte zwischen die Speichen des Rotors, so daß dieser beim Antrieb der Nabe durch einen Antriebsmotor der Antriebseinrichtung während des Meßlaufs in Drehung versetzt wird.

Mit dieser Spannvorrichtung können Rotore hinsichtlich ihrer Unwuchten gemessen werden, die nur auf relativ dünnen Aufnahmen, d. h. dünnen, feststehenden Meßachsen aufgeschoben werden können. Es handelt sich hier insbesondere um solche Rotoren, die mit ihren eigenen Rotorlagern auf die Meßachse aufgesetzt werden. Derartige Rotore sind beispielsweise Speichenräder, insbesondere Motorradräder. Mit der bekannten Vorrichtung ist es nicht möglich, derartige Rotore, die im Hinblick auf die Biegesteifigkeit der dünnen Aufnahme in Form der Meßachse relativ schwer sind, in Bezug auf ihre Unwuchten zu messen, ohne daß durch die Durchbiegung der Meßachse Meßwertverfälschungen hervorgerufen werden.

Aufgabe der Erfindung ist es, eine derartige Spanneinrichtung noch dahingehend weiterzubilden, daß mit ihr der zu messende Rotor nicht nur an speziell ausgebildeten Antriebseinrichtungen, nämlich an einer um eine Achse umlaufenden Nabe einer Auswuchteinrichtung, festgespannt werden kann, sondern generell auch an normal ausgebildeten Meßwellen (Vollwellen) von Unwuchtmeßeinrichtungen, insbesondere Auswuchtmaschinen.

Diese Aufgabe wird erfindungsgemäß bei der eingangs genannten Spannvorrichtung durch die kennzeichnenden Merkmale des Anspruchs 1 gelöst.

In den Unteransprüchen sind Weiterbildungen der Erfindung angegeben.

Durch die Erfindung wird die Mitnehmereinrichtung, welche bevorzugterweise als Mitnehmerscheibe ausgebildet ist, an der Meßachse drehbar gelagert, wobei ferner eine Gegenhalter/Anschlageinrichtung die Meßachse gegen Mitdrehen beim Meßlauf fixiert. Der Gegenhalter kann hierzu an einem bevorzugt mit der Meßachse zu verbindenden Teil, z. B. mit einem Zentrierstück für den auf die Meßachse aufzusetzenden Rotor, befestigt sein, und der Anschlag kann an einem an der Meßeinrichtung vorhandenen Teil bevorzugt an einer Schutzhaube, die während des Meßlaufs über den zu messenden Rotor geschwenkt wird, vorgesehen sein.

Hierdurch gewinnt man eine Spannvorrichtung, welche von der Ausbildung des Teils der Antriebseinrichtung der Unwuchtmeßvorrichtung unabhängig ist, an welchen die Spannvorrichtung für den Meßlauf anzukoppeln ist. Insbesondere läßt sich die Spannvorrichtung nach der Erfindung an herkömmlichen, normal ausgebildeten Meßspindeln bzw. Meßwellen, die als Vollwellen vorliegen, von Unwuchtmeßeinrichtungen, insbesondere Auswuchtmaschinen, ohne weiteres anpassen und ankoppeln.

Auch ist bei dieser Spannvorrichtung gewährleistet, daß beim Meßlauf keine Meßwertverfälschungen hervorgerufen werden, die aus einer Durchbiegung der Meßachse resultieren können. Zur Lagerung der Mitnehmereinrichtung besitzt die Mitnehmereinrichtung bevorzugt eine Mitnehmernabe, welche über Wälzlager, insbesondere Kugellager, an der Meßachse gelagert ist. Zur Zentrierung kann die Meßnabe ein Zentrierstück aufweisen, welches an ein entsprechend geformtes Zentrierstück an der Meßwelle der Antriebseinrichtung der Unwuchtmeßeinrichtung angepaßt ist.

Zur Ankopplung der Mitnehmereinrichtung an die Meßwelle bzw. Antriebseinrichtung kann die Mitnehmernabe an die Meßwelle angeflanscht und festgeschraubt werden. Es ist jedoch auch möglich, andere geeignete Aufspann- oder Andrückmittel zu verwenden, mit denen ein Ankoppeln der Mitnehmernabe an die Meßwelle bzw. Meßspindel der Auswuchtmaschine in geeigneter Weise erreicht wird.

Für den Meßlauf wird der Rotor, dessen Unwuchten gemessen werden sollen, mit seinen rotoreigenen Lagern, insbesondere Kugellagern, auf die Meßachse aufgespannt. Diese erfolgt in bevorzugter Weise mit Hilfe eines Zentrierstücks, das an einem zu den Wälzlagern für die Mitnehmernabe entgegengesetzt liegenden Ende aufgeschobenen Zentrierstücks, das entsprechend geformte Zentrierkronen aufweist, die der Mittenbohrung des aufzuspannenden Rotors entsprechen.

Um den Rotor für den Meßlauf in Drehung zu versetzen, kann die Mitnehmereinrichtung eine Mitnehmerscheibe aufweisen, die an der Mitnehmernabe befestigt ist. An der Mitnehmerscheibe können Mitnehmerstifte vorgesehen sein, die in Speichen des Rotors eingreifen. Falls der Rotor eine andere Ausführungsform besitzt, können an der Mitnehmerscheibe auch Vorsprünge vorgesehen sein, welche gegen eine Anlagefläche des Rotors andrückbar sind und den Rotor auf diese Weise mitnehmen. Ferner ist es möglich, die Mitnehmerscheibe mit entsprechenden Vorsprüngen zu versehen, die geeignet sind, am Rotor anzugreifen und diesen in Drehung zu versetzen. Der Rotor dreht sich dabei in seinen eigenen Lagern um die feststehende Meßachse. Mitnehmereinrichtung, Meßachse und Zentrierstück bilden eine Einheit, welche durch entsprechende Ausbildung der Mitnehmereinrichtung über diese an die Antriebseinrichtung ankoppelbar ist.

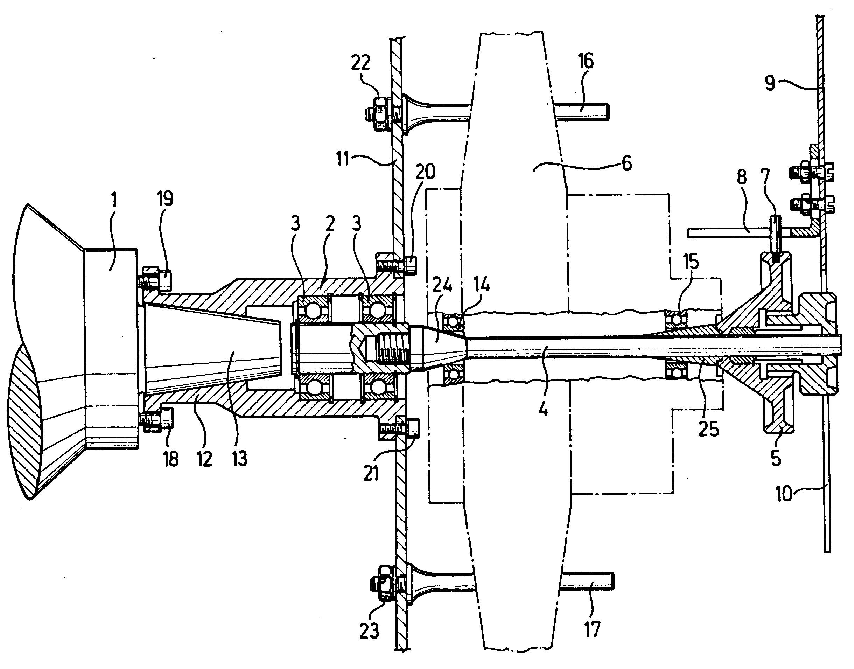

In der Figur ist ein Ausführungsbeispiel der Erfindung dargestellt. Anhand dieser Figur wird die Erfindung noch näher erläutert.

Die dargestellte Spannvorrichtung besitzt eine Meßachse 4, an deren einem Ende zwei als Kugellager 3, 3 ausgebildete Wälzlager für eine Mitnehmernabe 2 vorgesehen sind. Die Mitnehmernabe 2 ist hierdurch drehbar an der Meßachse 4 gelagert. An die Mitnehmernabe 2 ist ein Zentrierstück 12 mit einem Innenkonus angeformt. Der Innenkonus ist an ein als Zentrierkonus 13 ausgebildetes Zentrierstück angepaßt, das an eine herkömmliche Meßspindel bzw. Meßwelle 1 einer Auswuchtmaschine angeformt ist. Bei zylindrischen Meßspindeln ist das Zentrierstück entsprechend angepaßt.

Beim dargestellten Ausführungsbeispiel ist die Mitnehmernabe 2 mittels Schrauben 18, 19 mit ihrem einen Ende, das als Flansch ausgebildet ist, an der Meßwelle 1 befestigt. Am anderen Ende ist an einem Befestigungsflansch ebenfalls mittels Schrauben 20 und 21 eine Mitnehmerscheibe 11 befestigt. In Bohrungen der Mitnehmerscheibe 11 sind Mitnehmerstifte 16, 17 durch Schrauben 22, 23 befestigt. Diese Mitnehmerstifte 16, 17 können zwischen Speichen oder sonstige Ausnehmungen eines zu messenden Rotors 6, beispielsweise eines Speichenrads, hindurchgreifen.

Der Rotor 6 ist auf der Meßachse 4 über seine rotoreigenen Wälzlager, die als Kugellager 14 und 15 ausgebildet sind, drehbar gelagert. Für die Aufnahme des Rotors kann der Außenumfang der Meßachse 4 entsprechend ausgebildet sein. Insbesondere kann die Meßachse 4 hierzu einen Andrückkonus 24 aufweisen, der zur Zentrierung und zur Befestigung der Kugellager 14 und 15 bzw. des zu messenden Rotors 6 mit einem am anderen Ende der Meßachse 4 vorgesehenen Zentrierstück 5 zusammenwirkt. Das Zentrierstück 5 kann hierzu ebenfalls einen Zentrier- und Aufspannkonus 25 aufweisen, der von der anderen Seite her in das Rotorlager 14, 15 eingesetzt wird. Das Zentrierstück 5 kann in herkömmlicher Weise ausgebildet sein und so wirken, daß es beim Festspannen auf dem Ende der Meßachse 4 den Zentrier- und Aufspannkonus 25 in axialer Richtung in das Innere des Rotorlagers (in der Figur nach links) verschiebt, so daß das Rotorlager auf den Andrückkonus 24, welcher an die Meßachse 4 angeformt ist, angedrückt wird. Auf diese Weise liegen die beiden Kugellager 14 und 15 des zu messenden Rotors 6 fest mit ihren Innenringen auf der Meßachse auf. Auf diese Weise wird ein einwandfreies Festspannen und Zentrieren der Rotorlager 14 und 15 sowie des Rotors 6 erreicht. Ferner ist hierdurch der Rotor durch seine eigenen Lager auf der Meßachse 4 drehbar gelagert.

Damit die Meßachse 4 während des Meßlaufs stillgehalten wird, ist beim dargestellten Ausführungsbeispiel am Zentrierstück 5 ein Gegenhalter 7 vorgesehen in Form eines Gegenhalterstiftes, der gegen einen Anschlag 8 anliegt, welcher an einer Schutzhaube 9 befestigt ist. Die Schutzhaube 9 ist schwenkbar am Gehäuse der Unwuchtmeßeinrichtung bzw. der Auswuchtmaschine befestigt und wird während des Meßlaufs über den zu messenden Rotor 6 geschwenkt. Dabei nimmt die Schutzhaube 9 die in der Figur dargestellte Stellung ein, bei der der Gegenhalter 7 am Anschlag 8 bei Beginn des Meßlaufs zur Anlage kommt, wobei sich die Meßachse 4 um einen entsprechenden Winkelbetrag von der Ausgangslage des Gegenhalters 7 bis zum Anliegen am Anschlag 8 mitdreht und dann stillsteht. Das Ende der Meßachse 4, an welchem das Zentrierstück 5 befestigt ist, ragt dabei in eine Aussparung 10 der Schutzhaube 9.

Für den Meßlauf wird die Meßwelle 1 von einem nicht näher dargestellten Antriebsmotor um ihre Achse, welche mit der Meßachse 4 fluchtet, in Drehung versetzt. Dadurch werden auch die Mitnehmernabe 2 und die Mitnehmerscheibe 11 sowie die daran befestigten Mitnehmerstifte 16 und 17 mitgedreht. Die Mitnehmerstifte 16 und 17, welche in Eingriff mit dem Rotor 6 stehen, drehen dabei auch den Rotor mit. Der Rotor 6 dreht sich in seinen rotoreigenen Kugellagern 14 und 15. Durch den am Anschlag 8 anliegenden Gegenhalter wird über das auf die Meßachse 4 aufgespannte Zentrierstück 5 die Meßachse 4 gegen ein Mitdrehen gesichert, so daß während des Meßlaufs die Meßachse 4 stillgehalten wird.

Der Rotor 6 ist gegen eine axiale Verschiebung durch die Aufspannwirkung des Zentrier- und Aufspannkonus 25 und des Andrückkonus 24 gesichert. Die Mitnehmernabe 2 ist gegen eine axiale Verschiebung ebenfalls über die Kugellager 3, 3 gesichert. Beim Meßlauf ergeben sich keinerlei Meßwertverfälschungen, die aus Durchbiegungen der Meßachse 4 hervorgerufen werden könnten. Die Mitnehmernabe 2 läß sich so ausbilden, daß sie an beliebige Meßwellenformen angeflanscht bzw. angekoppelt werden kann, so daß ein universeller Einsatz der gezeigten Spannvorrichtung erreicht wird. Herkömmliche Auswuchtmaschinen können auch leicht an die Spannvorrichtung angepaßt werden.

## Patentansprüche

1. Spannvorrichtung, welche zum Aufspannen eines zu messenden Rotors, insbesondere Kraftfahrzeugrades, mit einer Antriebseinrichtung einer Unwuchtmeßeinrichtung verbindbar ist, enthaltend eine Spanneinrichtung mit einer während des Meßlaufs stillstehenden, an der Unwuchtmeßeinrichtung fixierbaren Meßachse, auf die der zu messende Rotor zentriert und drehbar aufsetzbar ist, und einer gegenüber der Meßachse drehbar gelagerten, von der Antriebseinrichtung angetriebenen Mitnehmereinrichtung, durch welche der Rotor gedreht wird, dadurch gekennzeichnet, daß die in der Spanneinrichtung frei drehbare Meßachse (4) an ihrem einen Ende Lager (3, 3) zur drehbaren Lagerung der Mitnehmereinrichtung (2, 11) und an ihrem anderen Ende einen Gegenhalter (7) aufweist, der während des Meßlaufs gegen einen Anschlag (8) an einem ortsfesten Teil der Unwuchtmeßeinrichtung zur Sicherung der Meßachse (4) gegen Mitdrehen anlegbar ist.

2. Spannvorrichtung nach Anspruch 1, dadurch gekennzeichnet, daß die Mitnehmereinrichtung (2, 11) eine Mitnehmernabe (2) aufweist, die auf der Meßachse (4) über ein oder mehrere Wälzlager (3, 3) drehbar gelagert und mit einer Meßwelle (1) der Antriebseinrichtung in Drehverbindung bringbar ist.

3. Spannvorrichtung nach Anspruch 1 oder 2, dadurch gekennzeichnet, daß die Mitnehmernabe (2) ein Zentrierstück (12) aufweist, das auf ein entsprechend geformtes Zentrierstück (13) der Meßwelle (1) aufsetzbar ist.

4. Spannvorrichtung nach einem der Ansprüche 1 bis 3, dadurch gekennzeichnet, daß die Meßachse (4) für die Aufnahme der rotoreigenen Wälzlager (14, 15) an ihrer Umfangsfläche entsprechend geformt ist.

5. Spannvorrichtung nach Anspruch 1, dadurch gekennzeichnet, daß der Anschlag (8) an einer an der Meßeinrichtung schwenkbar angeordneten Schutzhaube (9) befestigt ist, die während des Meßlaufs über den zu messenden Rotor (6) schwenkbar ist.

6. Spannvorrichtung nach einem der Ansprüche 1 bis 5, dadurch gekennzeichnet, daß der Gegenhalter (7) an einem auf das eine Ende der Meßachse (4) aufschiebbaren Zentrierstück (5) befestigt ist.

7. Spannvorrichtung nach einem der Ansprüche 1 bis 6, dadurch gekennzeichnet, daß die Mitnehmereinrichtung (2, 11) eine Mitnehmerscheibe (11) aufweist, die an der Mitnehmernabe (2) befestigt ist und mit am zu messenden Rotor (6) angreifende Mitnehmermittel verbunden ist bzw. Mitnehmermittel aufweist.

## Claims

1. A clamping apparatus which, for clamping in position a rotary member to be measured, in particular a motor vehicle wheel, can be connected to a drive means of an unbalance measuring means, including a clamping means with a measuring spindle which is stationary during the measuring run and which can be fixed to the unbalance measuring means and on to which the rotary member to be measured can be rotatably and centeredly fitted, and an entrainment means which is mounted rotatably with respect to the measuring spindle and which is driven by the drive means and by which the rotary member is rotated, characterised in that the measuring spindle (4) which is freely rotatable in the clamping means has at its one end bearings (3, 3) for rotatably supporting the entrainment means (2, 11) and at its other end a co-operating holder (7) which during the measuring run can be applied against an abutment (8) on a stationary part of the unbalance measuring means for preventing the measuring spindle (4) from also rotating.

2. A clamping apparatus according to claim 1 characterised in that the entrainment means (2, 11) has an entrainment hub (2) which is mounted rotatably on the measuring spindle (4) by way of one or more rolling bearings (3, 3) and can be brought into a condition of rotational connection with a measuring shaft (1) of the drive means.

3. A clamping apparatus according to claim 1 or claim 2 characterised in that the entrainment hub (2) has a centering portion (12) which can be fitted on to a correspondingly shaped centering portion (13) of the measuring shaft (1).

4. A clamping apparatus according to one of claims 1 to 3 characterised in that the measuring spindle (4) is of a suitable configuration at its peripheral surface for mounting the rolling bearings (14, 15) which are specific to the rotary member.

5. A clamping apparatus according to claim 1 characterised in that the abutment (8) is fixed to a protective hood (9) which is arranged pivotably on the measuring means and which during the measuring run can be pivoted over the rotary member (6) to be measured.

6. A clamping apparatus according to one of claims 1 to 5 characterised in that the co-operating holder (7) is fixed on a centering portion (5) which can be pushed on to one end of the measuring spindle (4).

7. A clamping apparatus according to one of claims 1 to 6 characterised in that the entrainment means (2, 11) has an entrainment disc (11) which is fixed to the entrainment hub (2) and which has entrainment means or is connected to entrainment means engaging the rotary member (6) to be measured.

## Revendications

1. Dispositif de serrage, qui, pour le serrage d'un rotor à mesurer, notamment d'une roue de véhicule automobile, peut être raccordé à un dispositif d'entraînement d'un dispositif de mesure du balourd, comportant une unité de serrage possédant un axe de mesure qui est fixe pendant l'exécution de la mesure, peut être fixé sur le dispositif de mesure du balourd et sur lequel le rotor à mesurer peut être monté de façon centrée et de manière à pouvoir tourner, et un dispositif d'entraînement, qui est monté de manière à pouvoir tourner par rapport à l'axe de mesure, est entraîné par le dispositif d'entraînement et au moyen duquel le rotor est entraîné en rotation, caractérisé par le fait que l'axe de mesure (4), qui peut tourner librement dans l'unité de serrage, possède, à l'une de ses extrémités, des paliers (3, 3) servant à supporter le dispositif d'entraînement (2, 11) de manière qu'il puisse tourner, et sur son autre extrémité, un élément de retenue antagoniste, qui pendant la durée de la mesure peut être appliqué contre une butée (8) située sur une partie fixe du dispositif de mesure du balourd pour empêcher une rotation conjointe de l'axe de mesure (4).

2. Dispositif de serrage suivant la revendication 1, caractérisé par le fait que le dispositif d'entraînement (2, 11) possède un moyeu d'entraînement (2), qui est monté sur l'axe de mesure (4) de manière à pouvoir tourner par l'intermédiaire d'un ou de plusieurs roulements (3, 3) et peut être réuni, selon une liaison d'entraînement en rotation, à un arbre de mesure (1) du dispositif d'entraînement.

3. Dispositif de serrage selon la revendication 1 ou 2, caractérisé en ce que le moyeu d'entraînement (2) possède un élément de centrage (12), qui peut être monté sur un élément de centrage (13), de forme correspondante, de l'arbre de mesure (1).

4. Dispositif de serrage selon l'une des revendications 1 à 3, caractérisé par le fait que l'axe de mesure (4) est conformé de façon correspondante au niveau de sa surface circonférentielle pour loger le roulement (14,15) propre au rotor.

5. Dispositif de serrage selon la revendication 1, caractérisé par le fait que la butée (8) est fixée à un capot de protection (9), qui est monté de manière à pouvoir pivoter sur le dispositif de mesure et qui, pendant l'exécution de la mesure, peut pivoter par rapport au rotor à mesurer (6).

6. Dispositif de tension selon la revendication 1 à 5, caractérisé par le fait que l'élément de retenue antagoniste (7) est fixé sur une pièce de centrage (5), qui peut être emmanchée sur une extrémité de l'axe de mesure (4).

7. Dispositif de serrage selon l'une des revendications 1 à 6, caractérisé par le fait que le dispositif d'entraînement (2,11) possède un disque d'entraînement (11), qui est fixé sur le moyeu d'entraînement (2) et est raccordé à des moyens d'entraînement qui sont accrochés au rotor à mesurer (6), ou possède des moyens d'entraînement.
